(19) **Europäisches Patentamt / European Patent Office / Office européen des brevets**

(11) **EP 2 917 999 B1**

(12) **FASCICULE DE BREVET EUROPEEN**

(45) Date de publication et mention de la délivrance du brevet:
**06.07.2016   Bulletin 2016/27**

(21) Numéro de dépôt: **13805439.0**

(22) Date de dépôt: **30.10.2013**

(51) Int Cl.:
*H02K 1/06* (2006.01)    *H02K 21/16* (2006.01)
*H02K 1/27* (2006.01)

(86) Numéro de dépôt international:
**PCT/FR2013/052602**

(87) Numéro de publication internationale:
**WO 2014/072618 (15.05.2014 Gazette 2014/20)**

(54) **MOTEUR ELECTRIQUE SYNCHRONE A AIMANTS PERMANENTS ET COMPRESSEUR ELECTRIQUE COMPORTANT UN TEL MOTEUR ELECTRIQUE**

SYNCHRONMOTOR MIT DAUERMAGNETEN UND ELEKTRISCHER KOMPRESSOR MIT SOLCH EINEM ELEKTROMOTOR

SYNCHRONOUS ELECTRIC MOTOR WITH PERMANENT MAGNETS AND ELECTRIC COMPRESSOR COMPRISING SUCH AN ELECTRIC MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **06.11.2012   FR 1260531**

(43) Date de publication de la demande:
**16.09.2015   Bulletin 2015/38**

(73) Titulaire: **Valeo Equipements Electriques Moteur 94046 Créteil Cedex (FR)**

(72) Inventeurs:
• **BOUARROUDJ, Lilya**
  **F-94220 Charenton Le Pont (FR)**
• **RAKOTOVAO, Mamy**
  **F-94400 Vitry Sur Seine (FR)**
• **WALME, Benoit**
  **F-78810 Feucherolles (FR)**

• **MATT, Jean-Claude**
  **F-21000 Dijon (FR)**

(74) Mandataire: **Ribeil, Alexandre Valeo Equipements Electriques Moteur Propriété Industrielle 2, rue André Boulle 94046 Créteil Cedex (FR)**

(56) Documents cités:
CN-U- 202 221 930      JP-A- H10 309 051
JP-A- 2002 010 548     JP-A- 2008 199 833
JP-A- 2009 027 842     JP-A- 2009 195 055
US-A1- 2013 038 162

Remarques:
Le dossier contient des informations techniques présentées postérieurement au dépôt de la demande et ne figurant pas dans le présent fascicule.

EP 2 917 999 B1

**Description**

**DOMAINE TECHNIQUE DE L'INVENTION.**

La présente invention concerne un moteur synchrone à aimants permanents pour des applications dans le domaine de l'automobile, notamment pour un compresseur électrique.

L'invention concerne également un compresseur électrique comprenant ce moteur électrique.

**ARRIERE PLAN TECHNOLOGIQUE DE L'INVENTION.**

Des considérations écologiques, et notamment la lutte contre le réchauffement climatique, sont de nos jours en faveur du développement des véhicules électriques.

Toutefois, les batteries de ces véhicules sont sensibles aux conditions climatiques, et l'autonomie du véhicule peut être fortement réduite dans les conditions les plus dures. Un système de climatisation est donc nécessaire.

Dans les véhicules à moteur thermique, le compresseur du système de climatisation est généralement couplé mécaniquement à ce moteur.

Dans les véhicules électriques le compresseur est entraîné par un moteur électrique qui doit satisfaire à de nombreuses contraintes, non seulement en termes de puissance, de couple, et de vitesse de rotation, mais aussi d'encombrement et de masse.

Un moteur de ce type est étudié dans un article présenté lors de la conférence "Progress in Electromagnetism Research Symposium", en 2011, à Marrakech, Maroc, par M. Khanchoul et ali ("Design and study of a permanent magnet synchronous motor", p. 160, PIERS, 20 - 23 mars 2011).

Il s'agit d'un moteur synchrone à aimants permanents de type NdFeB, d'une puissance nominale de 6 kW, présentant un couple maximum de 6 Nm et une vitesse maximale de 10.000 T/mn. La masse du moteur est inférieure à 2 kg et sa longueur est inférieure à 50 mm. Dans ce type de moteur les aimants permanents sont surfaciques, en étant implantés à la périphérie externe du rotor. Ces aimants sont maintenus par une frette.

Afin de satisfaire à des contraintes de compacité toujours plus grandes, il est apparu un besoin pour un moteur présentant les mêmes performances nominales, mais de longueur et de masse plus réduites.

**DESCRIPTION GENERALE DE L'INVENTION.**

Le but de la présente invention est donc de satisfaire ce besoin.

Elle a précisément pour objet un moteur électrique synchrone à aimants permanents du type de ceux comportant un stator bobiné comprenant des dents statoriques s'étendant axialement, formées dans une carcasse et un rotor comprenant une pluralité de ces aimants s'étendant axialement dans une culasse en étant enterrés selon une architecture à concentration de flux.

Ce moteur électrique synchrone à aimants permanents est remarquable en ce qu'une première longueur axiale du rotor est supérieure à une deuxième longueur axiale des dents statoriques et en ce qu'un rapport de la première longueur à la deuxième longueur est sensiblement compris entre 1,2 et 1,3. Selon d'autres caractéristiques considérées isolément ou en combinaison :

- Ce rapport est prédéterminé de telle sorte que cette première longueur est inférieure à une troisième longueur prédéterminée et des performances électriques du moteur, comprenant un couple et un rendement, sont sensiblement égales ou supérieures à des valeurs nominales prédéterminées.

- Ce rapport est prédéterminé fort avantageusement de telle sorte qu'une première contribution d'un flux magnétique à trois dimensions entre les dents statoriques et le rotor est sensiblement égale ou supérieure à une seconde contribution d'un flux magnétique à deux dimensions dans un entrefer entre un stator de référence et un rotor de référence présentant chacun cette troisième longueur prédéterminée dans un moteur électrique de référence présentant les mêmes valeurs nominales prédéterminées.

- On tire bénéfice du fait que ce rapport est en outre prédéterminé de manière à minimiser une augmentation d'une masse des aimants permanents, et un accroissement de matière et des chutes dans une fabrication de la culasse et de la carcasse.

- Les aimants sont enterrés selon une architecture dudit rotor à orientation radiale.

- le rotor comporte une culasse avec une âme centrale et des bras s'étendant radialement par rapport à l'âme centrale.

- Les bras comportent chacun à leur périphérie externe deux rebords s'étendant de part et d'autre du bras.

- Les aimants permanents sont logés dans des évidements de la culasse délimités chacun par deux faces latérales en regard l'une de l'autre de deux bras adjacents, une face externe de l'âme s'étendant entre les deux bras adjacents, et les rebords des deux bras adjacents du rotor.

- Dans le moteur électrique synchrone à aimants permanents selon l'invention, les aimants permanents sont en outre constitués avantageusement de ferrite.

- La culasse et la carcasse du moteur électrique synchrone à aimants permanents selon l'invention sont également constituées chacune fort avantageusement d'un empilement de tôles.

- Le nombre de dents statoriques est supérieur au nombre d'aimants permanents.

L'invention concerne aussi un compresseur électrique d'un fluide réfrigérant destiné à une installation de climatisation, remarquable en ce qu'il comprend une spirale entraînée par le moteur électrique synchrone à aimants permanents présentant les caractéristiques ci-dessus.

Ces quelques spécifications essentielles auront rendu évidents pour l'homme de métier les avantages apportés par le moteur électrique synchrone à aimants permanents selon l'invention, ainsi que par le compresseur électrique qui l'utilise, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

## BREVE DESCRIPTION DES DESSINS.

La **Figure 1a** est une vue éclatée des paquets de tôles d'un ensemble stator/ rotor d'un moteur électrique synchrone à aimants permanents selon l'invention.

La **Figure 1b** est une vue en perspective du stator et du rotor montrés sur la **Figure 1a** correspondant à une vue partielle d'un moteur électrique synchrone à aimants permanents selon l'invention, le rotor étant agencé en regard du stator.

La **Figure 2** est une vue de côté correspondant à la vue en perspective de la **Figure 1b.**

La **Figure 3** montre l'influence du rapport entre la première longueur du rotor et la deuxième longueur du stator sur le flux magnétique dans l'entrefer d'un moteur électrique synchrone à aimants permanents du type de l'invention.

La **Figure 4** est une vue en perspective du stator sans ses bobines.

La **Figure 5** est une vue en perspective du stator avec ses bobines.

La **Figure 6** est une vue partielle de dessus du rotor équipé de ses aimants et de ses ressorts, l'un des évidements de logement d'un aimant étant dépourvu de son aimant.

La **Figure 7** est une vue en perspective du rotor équipé de ses flasques à poids d'équilibrage

## DESCRIPTION DU MODE DE REALISATION PREFERE DE L'INVENTION.

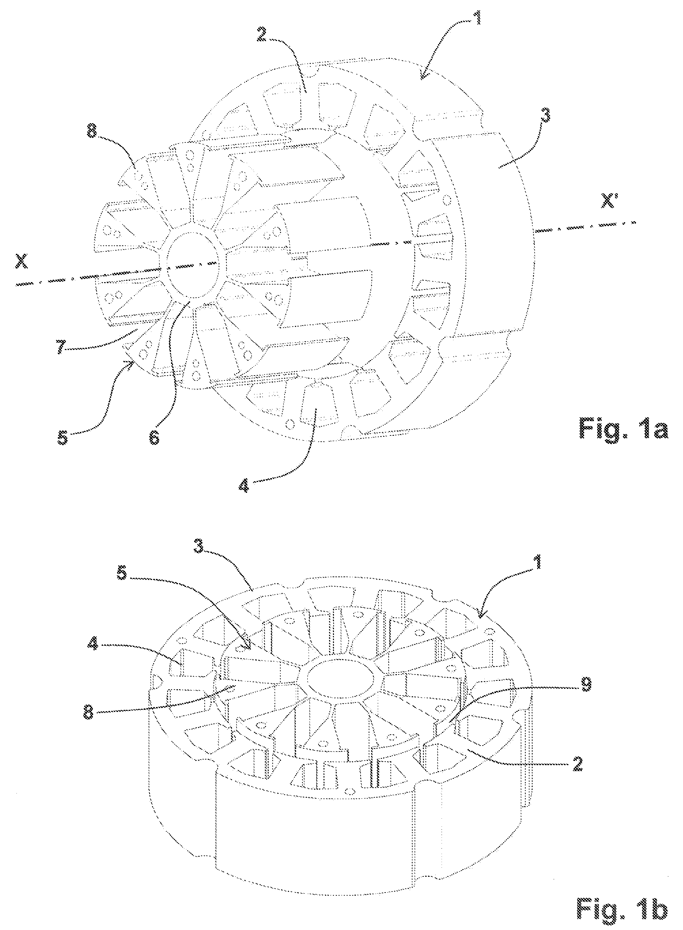

Le stator 1 d'un moteur électrique synchrone à aimants permanents représenté sur les **Figure 1a, 1b, 4 et 5** comprend des dents statoriques 2, appelées également bras statoriques, réparties régulièrement dans une direction circonférentielle et s'étendant selon une direction axiale XX' dans une carcasse 3 formée d'un empilement de tôles. Dans la suite de la description les termes axial, radial et transversal seront fait en référence à l'axe XX' du stator 1 centralement creux pour implantation d'un rotor 5. L'axe XX' constitue l'axe de rotation du moteur.

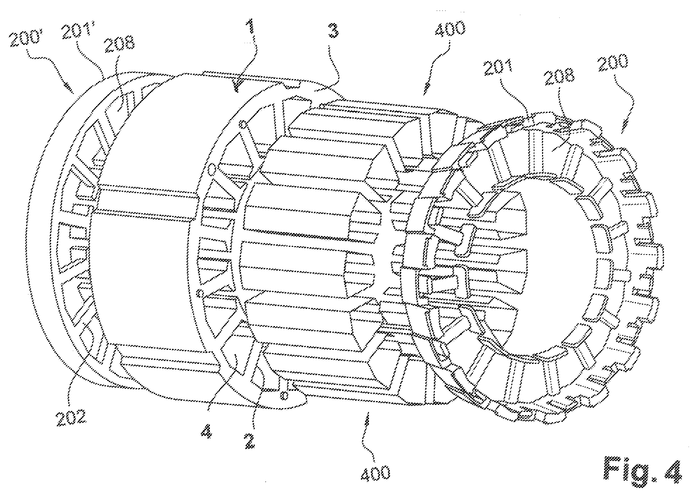

La carcasse 3 est configurée pour être portée par un carter que comporte le moteur électrique. Des cavités 4 longitudinales, en forme d'encoches du type semi ouvert dans ce mode de réalisation, sont présentes entre deux dents 2 consécutives. Ces encoches 4 sont dotées chacune d'un isolant d'encoche 400 visible à la figure 4 identique à la figure 11 de la demande FR 12/55481 déposée le 12/06/2012. Cet isolant 400 est en forme de membrane fine réalisée dans un matériau électriquement isolant et bon conducteur de chaleur tel qu'un matériau aramide du type Nomex (Marque déposée). Les isolant 400 épousent le contour des encoches 4 et sont donc ouvert au niveau de l'espace entre deux dents consécutives comme visible à la figure 4. Dans ce mode de réalisation les isolants 400 ont une épaisseur de 0, 24 mm. Bien entendu cela dépend des applications.

Les cavités longitudinales 4 entre les dents statoriques 2 sont destinées à recevoir les fils continus conducteurs de bobinages statoriques créant le champ magnétique tournant. Ces fils conducteur sont électriquement conducteurs, en étant par exemple en cuivre et/ou en Aluminium, en étant recouverts d'une couche électriquement isolante, telle que de l'émail.

Les bobinages statoriques pourront être agencés pour former par exemple un moteur électrique synchrone du type triphasé à point neutre comme décrit par exemple dans le document EP 0 831 580 auquel on se reportera pour plus de précisions.

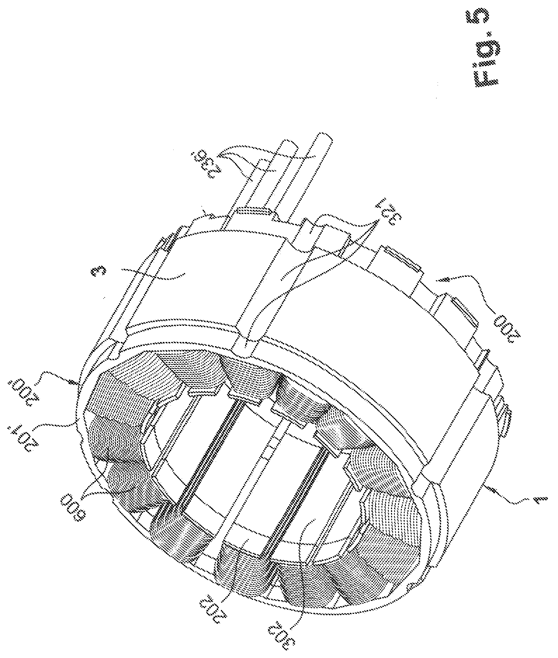

Ainsi on voit à la figure 5 les trois extrémités 236' des bobinages statoriques du type triphasé. Ces extrémités 236' sont configurées pour être reliées aux bras de l'onduleur visibles dans ce document EP 0 831 580.

Chaque phase comporte au moins un bobinage statorique sous la forme d'une bobine 600 (Figure 5) comportant des spires. Ces spires pourront être formées par enroulement de fils conducteurs autour d'une dent 2 avec intercalation de l'isolant d'encoche 400 pour formation d'une bobine 600. Ces enroulements sont réalisés par exemple à l'aide d'une aiguille creuse dans laquelle pénètre le fil, l'aiguille exécutant le mouvement d'enroulement en se déplaçant pour ce faire axialement radialement et circonférentiellement dans les encoches 4. Il y a un plus grand nombre de fils rangés à la périphérie externe d'une encoche 4, qu'à la périphérie interne d'une encoche 4. Un espace existe entre les deux bobines 600 d'une même encoche 4, enroulées chacune autour de l'une des dents délimitant l'encoche 4. Les extrémités 236' sont gainées pour être isolées des bobines. Il est prévu un ligaturage pour maintenir ces extrémités 236'.

Dans un mode de réalisation (Figures 4 et 5) le stator 1 pourrait être équipé d'éléments électriquement isolants 200, 200' à chacune des extrémités de sa carcasse 3 pour formation de bobines 600, les dits éléments étant en contact avec les bras ou dents 2 du stator 1, comme décrit dans la demande FR 12/55481 précitée à laquelle on se reportera. De tels éléments isolants 200, 200' sont équipés de bras 202 issus d'un support 201, 201'. Deux bras consécutifs 202 délimitent une encoche 208 à l'image de l'encoche 4' Les éléments 200, 200' sont par exemple en matière plastique telle que du PA 6.6, qui pourront être renforcés par des fibres telles que des fibres de verre. Ils sont plus épais que les isolants 400. Les bras 202 présentent des pieds saillants (Figure 4) pour formation de gorges pour les spires, Ces gorges sont délimitées à leur périphérie externe par la périphérie interne des supports 201, 201'. Les bobines 600 traversent le paquet de tôles du stator 1 et présentent de part et d'autre de ce paquet de tôles des chignons montés dans les gorges des éléments 200, 201' comme visible à la figure 5. La périphérie interne des bras 202 est alignées avec la périphérie interne 302 des dents 2 comme visible à la figure 5. Les spires des bobines 600 sont protégées par les éléments 201, 201' et les isolants 400. La disposition des bobines 600 de manière concentrique permet de réduire la longueur axiale du stator 1.

Bien entendu en variante les bobinages statoriques pourront être du type pentaphasé ou hexaphasé. Dans tous les cas les sorties des bobinages statoriques sont reliées aux bras d'un onduleur appartenant à un dispositif électronique de commande et de contrôle, par exemple du type de celui décrit dans le document EP 0 831 580, porté par le carter du moteur électrique.

Le moteur électrique synchrone pourra appartenir à un compresseur électrique d'un fluide réfrigérant, par exemple du type à au moins deux spirales. Ce type de compresseur à spirales est appelé « compresseur scroll ». Il est destiné à une installation de climatisation notamment d'un véhicule automobile comme divulgué dans l'article précité. Pour mémoire on rappellera que l'une des spirales est fixe tandis que l'autre spirale est mobile dans la spirale fixe. Dans ce cas le carter du moteur électrique pourra comporter plusieurs tronçons à savoir un tronçon avant renfermant le système à deux spirales, appelées également volutes, dont l'une est mobile et l'autre fixe, pour pomper et comprimer le fluide réfrigérant, un tronçon central traversé par le fluide réfrigérant et portant le stator 1 et un tronçon arrière comportant un flasque. Le flasque pourra porter l'électronique de commande et de contrôle dédiée aux bobines des bobinages statoriques. En variante l'électronique de commande et de contrôle pourra être portée par le tronçon central du carter.

Le moteur électrique comporte un rotor 5 avec présence d'un entrefer 9 entre la périphérie interne du stator 1, comprenant la face interne 302 des dents 2, et la périphérie externe du rotor 5 solidaire d'un arbre. Cet arbre pourra entraîner directement la spirale mobile du compresseur.

L'article précité montre un exemple de structure du compresseur.

Le rotor 5, de la forme générale d'un cylindre, comprend une culasse 6 formée également par un empilement de tôles solidaire de l'arbre précité. Par exemple cet arbre pourra être moleté localement en étant emmanché à force dans l'ouverture centrale de l'empilement des tôles.

Ces tôles pourront, pour des raisons économiques, être découpées en même temps que celles de la carcasse 3.

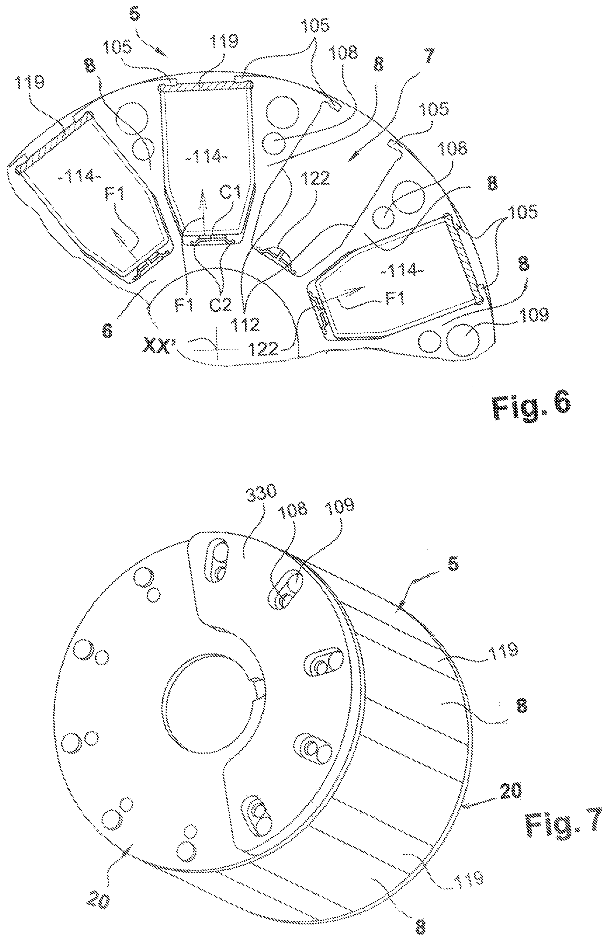

Des aimants permanents, référencés en 114 à la figure 6, sont enterrés dans la culasse 6 du rotor 5 selon une architecture à concentration de flux.

Pour ce faire, dans ce mode de réalisation des évidements 7 s'étendent dans la culasse 6 selon la direction axiale XX' et sont destinés à recevoir les aimants permanents 114. Les évidements 7 sont répartis circonférentiellement régulièrement.

Ces évidements 7 reçoivent les aimants 114 de manière à former une pluralité de pôles 8 Nord et Sud, répartis régulièrement dans la partie périphérique du rotor 5. L'une des faces latérale de l'aimant 114 constitue un pôle Nord, tandis que l'autre face latérale de cet aimant constitue un pôle Sud..

Plus précisément le rotor 5 pourra comporter, comme visible dans les figures 1a, 1b et 6

- une culasse 6 avec une âme centrale,
- des bras 8 s'étendant radialement par rapport à l'âme, ces bras comportant chacun à leur périphérie externe deux rebords 105 s'étendant de part et d'autre du bras,
- des aimants permanents 114 (Voir figure 6) positionnés à l'intérieur des évidements 7 délimités chacun par deux faces latérales 112 en regard l'une de l'autre de deux bras adjacents, une face externe de l'âme s'étendant entre les deux bras adjacents, et les rebords des deux bras adjacents du rotor.

Les aimants 114 sont d'orientation radiale en référence à la figure 6. Ils s'étendent axialement dans la culasse 6.

Les évidements 7 de la carcasse 6 constituent des logements pour les aimants permanents agencés entre deux pôles 8 consécutifs. Ces aimants 114 sont d'orientation radiale tout comme les évidements 7. Ils génèrent un flux magnétique utile du rotor 5 aux dents 2 du stator 1. Ce flux magnétique utile circule globalement radialement dans les pôles 8 alternés régulièrement en une pluralité de pôles Nord et Sud.

Les pôles 8 sont formés chacun par un bras s'étendant radialement et comportant à sa périphérie externe deux rebords 105 s'étendant de part et d'autre du bras. Plus précisément chaque bras, et donc chaque pôle 8, comporte une première portion globalement d'orientation radiale par rapport à l'axe XX' et de largeur constante issue de l'âme centrale de la culasse 6 et une deuxième portion 112 s'évasant en direction opposée à l'axe XX' et terminée par des rebords 105. Les évidements 7 ont une forme complémentaire à celle des aimants 114. Ces aimants 114 occupent au maximum l'espace disponible dans le rotor 5 et ont une forme parallélépipédique de largeur constante au niveau des deuxièmes portions 112 des bras 8 et deux angles biseautés à leur périphérie interne au niveau des premières portions des bras. Les aimants 114 ont donc une section sensiblement rectangulaire mais sont chanfreinés en forme de coin vers l'axe XX'. Des plaquettes 119 (Figure 6), par exemple en matière plastique, pourront être intercalées entre les faces internes de deux rebords consécutifs 105 délimitant extérieurement un évidement 7 et la face externe de l'aimant 114 logé dans l'évidement 7. Les plaquettes 119 sont plus souples que les aimants 114 et protègent ceux-ci en évitant que les aimants 114 se cassent sous l'action de la force centrifuge. Si l'on considère un même pôle 8, ce pôle est intercalé selon les cas entre deux faces Nord ou Sud de deux aimants consécutifs pour formation respectivement d'un pôle Nord et d'un pôle Sud.

La machine électrique tournante pourra donc avoir une puissance maximum tout en étant compacte radialement. Il est prévu dans ce mode de réalisation dix évidements 7 et quinze dents statoriques 2.

On notera que le nombre d'aimants 114 et de dents statorique est supérieur à celui du document précité dans lequel il est prévu six dents statoriques et huit aimants surfaciques. En outre dans ce document il est fait appel à des aimants en terre rare du type Néodyme Fer-Bore (NdFeB). Dans le mode de réalisation décrit les aimants 114 pourront être des aimants en Ferrite plus économiques. De plus on peut réduire l'entrefer 9 entre le stator 1 et le rotor 5 du fait que dans ce mode de réalisation il n'est pas prévu de frette ce qui permet d'augmenter la puissance de la machine. Ainsi on gagne 0,15 mm correspondant à l'épaisseur de la frette. Ainsi l'entrefer entre le stator et le rotor pourra être inférieur ou égal à 0, 50 mm. Les tôles de l'empilement de tôles du stator 1 et du rotor 5 pourront avoir une épaisseur de 0, 35 mm tout comme celle du document précité.

Ce rotor 5 pourra comporter, comme décrit dans la demande FR 12/54949 déposée le 30/05/2012 à laquelle on se reportera,

- des ressorts 122 (Voir figure 6) positionnés à l'intérieur des évidements 7 entre la face externe de l'âme de la culasse 6 et une face interne de l'aimant 114 tournée vers l'axe XX' du rotor 5, ces ressorts assurant un maintien de l'aimant permanent 114 à l'intérieur de son logement, formé par l'évidement 7, contre la plaquette 119 concernée en appui sur les rebords 105 des bras 8 concernés en exerçant par déformation un effort radial F1 sur l'aimant permanent 114 de l'intérieur vers l'extérieur du rotor 5.

Les ressorts 122 pourront travailler dans un domaine élasto-plastique.

Ces ressorts 122 présentent chacun un contact linéaire C1 avec périphérie interne de l'aimant 114 constituée par la face interne de celui-ci et deux contacts linéaire C2 avec la face externe de l'âme de la culasse 6. Ces ressorts 122 comportent chacun une extrémité biseautée, qui comporte une fente (Non référencée) pour réduire la rigidité de l'extrémité biseautée. Chaque ressort 122 comporte, dans ce mode de réalisation une portion arrondie centrale et deux portions arrondies d'extrémités configurées pour former les contacts C2. Ces portions arrondies sont situées de part et d'autre de la portion arrondie centrale configurée pour former le contact C1.

On notera que les pôles 8 de ce mode de réalisation sont troués pour notamment le passage de rivets d'assemblage, de préférence en matière amagnétique, de l'empilement de tôles du rotor comme décrit dans la demande FR 12/54949 précitée. Plus précisément comme visible à la figure 7, les tôles du rotor 5 sont trouées pour le passage des rivets d'assemblage 108 précités traversant l'empilement des tôles pour formation d'un paquet de tôles manipulable et transportable. Cet empilement de tôles comporte également d'autres ouvertures traversantes pour recevoir des tirants d'assemblage 109, de préférence en matériau amagnétique, de deux flasques 20 en matériau amagnétique placés de part et d'autre du paquet de tôles du rotor 5. Les flasques 20 sont par exemple en Aluminium ou en matière plastique, tandis que les rivets 108 et les tirants 109 sont par exemple en inox.

Chaque flasque 20 pourra porter un poids d'équilibrage référencé en 330 à la figure 7. Les poids 330 sont diamétralement opposés d'un flasque 20 à l'autre flasque 20. Ces poids 330 pourront être plus lourds que les flasques 20 en étant par exemple en laiton. Les poids 330, en forme de demi-anneau, présente des creusures de forme oblongue pour réception des rivets 108. Les creusures présentent localement un fond troué pour appui des têtes des tirants 109 constituant également des tirants d'assemblage des pois 330 avec les flasques 20.

La présence des poids 330 n'est pas impérative, les flasques 20 pouvant présenter en variante une pluralité de saillies, dont certaines pourront être usinées pour équilibrage du rotor. En variante les saillies sont creuses et certaines pourront être équipées de poids sertis dans les saillies pour équilibrage du rotor.

La culasse 3 et les éléments 200, 200' pourront présenter à leur périphérie externe des passages, référencés en 321 à la figure 5, pour des tirants d'assemblage des tronçons avant et arrière du carter du moteur électrique. Ces passages sont implantés en regard des dents 2 et des bras 202. On notera que le diamètre externe des éléments isolants 200, 200' est inférieur à celui de l'empilement des tôles du stator 1. La culasse 3 présente également des ouvertures pour réception de plots que comporte les éléments 200, 200' au niveau de leur face destinée à venir en contact avec l'extrémité concernée de l'empilement des tôles du stator. Dans ce mode de réalisation les pions sont des pions d'encliquetage présentant chacun deux portions de cylindre ayant des faces plates en regard l'une de l'autre et séparées par un espace autorisant une déformation élastique des deux portions l'une vers l'autre lors de leur insertion dans l'ouverture concernée de la culasse. Le nombre de dents 2 est de manière précitée supérieur au nombre de pôles 8 et d'aimants.

Dans un mode de réalisation décrit dans la demande FR 12/54949 il est indiqué à titre non limitatif, que l'empilement des tôles du rotor 5 a une longueur égale à 41 mm et que le diamètre externe de ce rotor est de 61 mm. En pratique la longueur de l'empilement du paquet de tôles du rotor est identique à celle du paquet de tôles du stator comme visible par exemple à la figure 1 (b) du document EP 2 506 399. Cette longueur identique constitue une valeur de référence Lm. dite par la suite troisième longueur. Ce type de moteur électrique synchrone à aimants permanents constitue un moteur électrique de référence.

L'entité inventive a construit, de manière non limitative, un tel moteur électrique de référence à troisième longueur Lm égale à 41 mm et à diamètre externe de rotor égal à 61 mm. Dans ce prototype de moteur électrique le diamètre externe de l'empilement des tôles du stator, constituant un paquet de tôles, était globalement de 100 mm et le diamètre interne dudit empilement était de 62 mm.

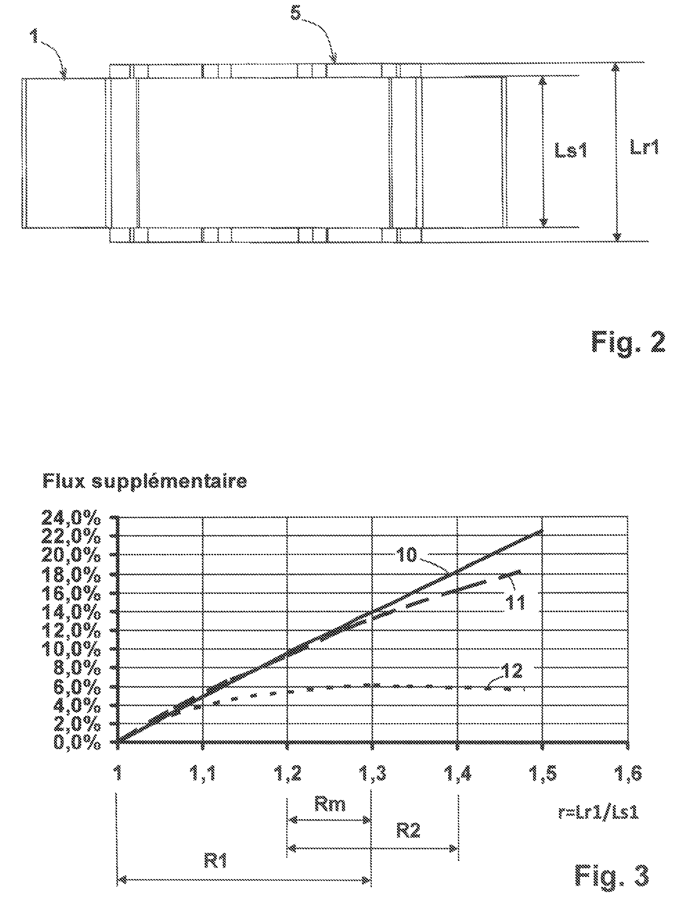

Des simulations sur ordinateur d'un moteur électrique synchrone à aimants permanents du type de l'invention, notamment au moyen de calcul de flux magnétique en trois dimensions, ont permis à l'entité inventive de déterminer que les performances électriques, telles que le couple et le rendement, étaient augmentées en rendant une première longueur axiale Lr1 du rotor 5 supérieure à une deuxième longueur axiale Ls1 du stator 1 (Voir figure 3).

L'entité inventive a donc décidé d'améliorer ce prototype de moteur électrique en rendant une première longueur Lr1 dudit rotor 5 supérieure à une deuxième longueur Ls1 desdites dents statoriques 2 et en créant un rapport r de ladite première longueur Lr1 à ladite deuxième longueur Ls1 inférieur à 1, 3.

L'augmentation des performances électriques a permis de rendre la longueur Lr1 inférieure à la troisième longueur Lm du moteur de référence, qui dans l'exemple de réalisation était égale à celle mentionné dans l'article précité

La **Figure 1b** montre bien une extrémité du rotor 5 dépassant de l'entrefer 9 entre les dents statoriques 2 et les pôles 8 du rotor 5.

De la sorte, il est possible de diminuer l'encombrement axial du moteur selon l'invention tout en conservant les mêmes valeurs nominales prédéterminées d'un moteur électrique de référence.

La **Figure 2** précise les caractéristiques dimensionnelles dont il s'agit:

La première longueur Lr1 du rotor 5 est une distance entre les faces radiales d'extrémités du rotor 5. Dans ce mode de réalisation préféré, cette distance est égale à une longueur axiale des aimants permanents. Comme le montre bien la **Figure 2**, le rotor 5 est agencé symétriquement par rapport au stator 1.

La deuxième longueur Ls1 correspond à une épaisseur d'un paquet de tôles formant la carcasse 3, c'est-à-dire la deuxième longueur axiale des dents statoriques 2. Les paramètres supplémentaires choisis par l'entité inventive pour les simulations qu'elle a menées à bien, sont des autres caractéristiques dimensionnelles:

Lm: troisième longueur précitée du stator 1 ou du rotor 5 du moteur de référence (Ls0 ou Lr0).
Ns0: nombre précité de spires de référence du stator 1 du moteur de référence;
Ns1: nombre de spires du stator 1 du moteur selon l'invention;

et des caractéristiques fonctionnelles:

LD0, LQ0: inductances statoriques de référence du stator 1 du moteur de référence (axes direct et en quadrature);
LD1, LQ1: inductances statoriques du stator 1 du moteur selon l'invention (axes direct et en quadrature);
Rs0: résistance statorique de référence du moteur de référence;
Rs1: résistance statorique du moteur selon l'invention;
Kt0: constante de couple de référence du moteur de référence;
Kt1: constante de couple du moteur selon l'invention.

Ces caractéristiques dimensionnelles et fonctionnelles sont liées:

- les résistances statoriques Rs sont proportionnelles au nombre de spires du stator 1 au carré $Ns^2$ et à la troisième longueur Lm;
- les inductances statoriques LD, LQ sont proportionnelles également au nombre de spires du stator 1 au carré $Ns^2$ et à la troisième longueur Lm;
- les constantes de couple Kt sont proportionnelles au nombre de spires du stator 1 Ns et à la troisième longueur Lm.

Il s'agit d'obtenir un moteur optimisé ayant les mêmes caractéristiques (couple, rendement) que le moteur de référence mais plus court (réduction de coût et de poids).

Pour avoir les mêmes caractéristiques, il faut avoir les mêmes valeurs de constante de couple Kt, de résistance statorique Rs, et d'inductances statoriques LD, LQ, c'est-à-dire:

Condition 1:

Les conditions de conservation de Rs et de LD, LQ entraînent que:

$$Ns1/Ns0 = (Ls0/Ls1)^{1/2}$$

Condition 2:

Les conditions de conservations de Kt entraînent que:

$$Ns1/Ns0 = (Ls0/Ls1)$$

Ces conditions sont résumées dans la **Table I** ci-dessous:

**Table I**

| | Ns1/Ns0 | | |
| | Condition 1 | Condition 2 | |
| Ls0/Ls1 | $(Ls0/Ls1)^{1/2}$ | Ls0/Ls1 | Besoin flux |
| 1 | 1,00 | 1,00 | 0 |
| 1,1 | 1,05 | 1,10 | 4,9% |
| 1,2 | 1,10 | 1,20 | 9,5% |
| 1,3 | 1,14 | 1,30 | 14,0% |
| 1,5 | 1,22 | 1,50 | 22,5% |

Les deux conditions sont impossibles à réaliser simultanément sauf pour Ls1 = Ls0, c'est-à-dire pour une deuxième longueur du stator 1 identique à la troisième longueur Lm du moteur de référence, ce qui n'est pas le but recherché.

Pour l'application aux compresseurs électriques envisagée, la première condition est la plus importante, car le fonctionnement à haute vitesse n'est pas possible si la conservation des inductances statoriques LD, LQ n'est pas respectée.

Le choix de Ns1 est donc dicté par la première condition, et, de manière à respecter la deuxième condition, la perte de Kt doit être compensée par un apport de flux magnétique complémentaire comme indiqué dans la **Table I.**

Une première solution pour obtenir cet apport consisterait à utiliser des aimants permanents présentant une induction magnétique rémanente plus élevée que les aimants du moteur de référence.

Dans le moteur de référence les aimants sont constitués de ferrites, et leur remplacement par des aimants aux terres rares, par exemple, conduirait à une augmentation des coûts de fabrication. Cette première solution n'a pas été retenue par l'entité inventive.

En application de l'augmentation de performances obtenue par une première longueur Lr1 du rotor 5 supérieure à une deuxième longueur Ls1 du stator 1, mise en évidence par les simulations sur ordinateur, l'entité inventive a déterminé un rapport r= Lr1/ Ls1 permettant d'obtenir l'apport de flux magnétique complémentaire rendu nécessaire par le respect de la deuxième condition.

La **Table II** suivante montre le flux magnétique complémentaire obtenu par une première contribution de flux magnétique à trois dimensions, notamment entre les faces radiales des dents statoriques 2 et les extrémités des pôles 8 du rotor 5, par rapport à une seconde contribution d'un flux magnétique à deux dimensions (c'est-à-dire correspondant à une induction magnétique sans composante axiale) dans l'entrefer 9 entre un stator et un rotor ayant la même troisième longueur Lm.

**Table II**

| | r= Lr1/ Ls1 | 1,00 | 1,07 | 1,13 | 1,20 | 1,27 | 1,30 | 1,34 | 1,41 | 1,48 |
|---|---|---|---|---|---|---|---|---|---|---|
| | Apport 3D % | 0,0 | 3,6 | 6,6 | 9,3 | 12,0 | 13,2 | 14,4 | 16,4 | 18,3 |
| Besoin flux Ls0/Ls1 | 1,1 | 4,9 | 4,9 | 4,9 | 4,9 | 4,9 | 4,9 | 4,9 | 4,9 | 4,9 |
| | 1,2 | 9,5 | 9,5 | 9,5 | 9,5 | 9,5 | 9,5 | 9,5 | 9,5 | 9,5 |
| | 1,3 | 14,0 | 14,0 | 14,0 | 14,0 | 14,0 | 14,0 | 14,0 | 14,0 | 14,0 |

La solution de raccourcissement est optimale si la relation

Lr1/ Ls1 < Ls0/ Ls1 est approximativement vérifiée, tout en assurant que l'apport du flux complémentaire est suffisant pour que la deuxième condition de conservation de la constante de couple Kt soit satisfaite.

La **Figure 3** illustre cette solution en fonction des données de la **Table III** faisant la synthèse des **Tables I et II.** La droite en trait plein 10 indique le flux magnétique à apporter en fonction du rapport r= Lr1/ Ls1. La courbe en tirets 11 indique l'apport de flux par effet 3D en fonction de ce rapport r.

Si ce premier critère devait être strictement respecté, le rapport r= Lr1/ Ls1 optimum devrait être inférieur à 1,2.

Un rapport r de l'ordre de 1,3 conduisant à un critère approximativement respecté est encore acceptable avec une première longueur Ls1 légèrement supérieure à la troisième longueur Lm du stator de référence du moteur de référence.

Au-delà de cette première plage R1 de ratios, le gain économique est faible, même si la masse du cuivre utilisé pour les enroulements statoriques a diminué, car la masse du fer du rotor 5 a augmenté ainsi que les chutes correspondant aux tôles de stator 1 non utilisées. De plus, l'encombrement de la machine devient pénalisant, ce qui ne correspond pas aux besoins initiaux.

Un facteur de pondération de l'apport de flux magnétique égal au rapport r au cube, représentatif du surcoût en termes de masse d'aimant, de masse de tôles et de chutes conduit à un second critère présentant un extremum dans une seconde plage R2 comprise entre 1,2 et 1,4 comme le montre bien la courbe en pointillés 12 de la **Figure 3.**

La combinaison de ces deux critères conduit à une fourchette optimum Rm du rapport r selon l'invention compris sensiblement entre 1,2 et 1,3.

**Table III**

| r= Lr1/ Ls1 | 1,00 | 1,07 | 1,13 | 1,20 | 1,27 | 1,30 | 1,34 | 1,41 | 1,48 |
|---|---|---|---|---|---|---|---|---|---|
| Flux supp. (Besoin) % | 0,0 | | 4,9 | 9,5 | | 14,0 | | | 22,5 |
| Flux supp. (3D) % | 0,0 | 3,6 | 6,6 | 9,3 | 12,0 | 13,2 | 14,4 | 16,4 | 18,3 |
| Flux supp. (3D)/ $r^3$ % | 0,0 | 2,96 | 4,53 | 5,36 | 5,90 | 6,01 | 5,98 | 5,85 | 5,65 |

Par ailleurs, la diminution de la deuxième longueur Ls1 du stator 1 permet de réduire les inductances statoriques LD1, LQ1 du moteur électrique selon l'invention, ce qui diminue la tension induite aux bornes des phases statoriques et permet au moteur d'atteindre des vitesses de rotation élevées.

Dans une forme de réalisation particulière de ce moteur, le rotor 5 comprenant dix aimants permanents tourne à l'intérieur d'un stator comportant quinze dents statoriques 2.

Les aimants sont constitués de ferrite et sont agencés dans les évidements 7 de la culasse 8 selon de manière précitée une architecture à concentration de flux.

Un moteur de référence, dans lequel la troisième longueur Lm du le stator de référence et du rotor de référence valait 41 mm, a été raccourci en un moteur selon l'invention présentant des performances électriques supérieures comportant des dents statoriques 2 d'une deuxième longueur comprise entre 28 et 35 mm et un rotor 5 d'une première longueur comprise entre 36 et 40 mm sans que la nuance d'aimants soit modifiée.

Dans un mode de réalisation du moteur électrique selon l'invention les fils des bobines recouvertes d'émail ont un diamètre compris entre de 0, 53 et 0,63 mm.

On notera que le diamètre des fils est diminué par rapport au diamètre des fils mentionnés dans l'article précité (Diamètre de 1, 4 mm).

Dans ce mode de réalisation le diamètre externe du stator est globalement de 100 mm.

Il résulte de ce qui précède que le gain dans la direction axiale XX', qui peut être de 10 mm, au niveau des enroulements statoriques a permis notamment de libérer un espace pour des connecteurs et ainsi de rendre plus compact le compresseur électrique à volute ou spirales de type "scroll" dans lequel le moteur selon l'invention est utilisé.

On notera également que l'on a conservé la structure générale du rotor 5 à évidements 7 et du stator 1 à encoches 4.

Comme il va de soi, l'invention ne se limite pas au seul mode de réalisation préférentiel décrit ci-dessus, notamment, les nombres d'aimants et de dents statoriques 2 indiqués ne sont que des exemples.

En variante, le rotor 5 ne dépasse pas obligatoirement du stator 1 de façon symétrique.

Dans une autre variante, les aimants ne s'étendent pas obligatoirement sur toute la première longueur du rotor 5.

Dans encore une autre variante le rotor est dépourvu des ressorts 122.

Dans encore un autre mode de réalisation les évidements 7 du rotor 5 pourront être fermés.

Dans encore un autre mode de réalisation les pôles 8 pourront présenter à leur périphérie externe un lobe pour diminuer les fuites magnétique circulant à la périphérie externe des pôles comme décrit dans la demande FR 11/61016 déposée le 01/12/2011 à laquelle on se reportera, ladite demande divulguant un ratio de l'angle de recouvrement polaire d'un lobe au pas polaire compris 0, 35 et 0,50.

Bien entendu on peut optimiser encore les pôles du rotor de manière à diminuer les fuites magnétiques circulant à la périphérie externe des pôles comme décrit dans la demande FR 11/61019 à laquelle on se reportera. Dans cette demande on tient compte de la largeur de l'ouverture entre deux rebords consécutifs 105 d'un même évidement 7 et de la largeur périphérique externe des aimants 114. Avantageusement le ratio entre la largeur de cette ouverture et la largeur de l'aimant est compris entre 0,35 et 0,8. La périphérie externe des pôles pourra être en forme de lobe ou pointue.

Dans un autre mode de réalisation les aimants permanents pourront être enterrés dans le rotor selon une architecture dudit rotor de type à concentration de flux faisant appel à des aimants permanents 114 faisant appel à des paires d'aimants agencés en V symétriquement par rapport à l'axe de rotation XX'.

Une telle architecture est décrite par exemple dans la demande EP 2 506 399 à laquelle on se reportera.

Bien entendu les valeurs numériques mentionnées ci-dessus sont données à titre d'exemple non limitatif sachant que les conditions 1 et 2 doivent être respectées. Le nombre de dents 2 et d'aimants 114 dépend des applications.

L'application du moteur électrique selon l'invention à l'entraînement d'un compresseur d'une installation de véhicule automobile n'est aussi qu'un exemple d'application: l'homme de métier tirera bénéfice du moteur électrique selon l'invention dans d'autres applications où compacité et vitesse de rotation élevées sont requises.

D'autres modes de réalisation basés sur des configurations d'aimants différentes et/ ou sur des valeurs numériques différentes de celles spécifiées ci-dessus, et correspondant à d'autres essais ou simulation de moteurs synchrones à aimants permanents, ne sortiraient donc pas du cadre de la présente invention dans la mesure où ils résultent des revendications ci-après.

**Revendications**

1. Moteur électrique synchrone à aimants permanents du type de ceux comportant un stator (1) bobiné comprenant des dents statoriques (2) s'étendant axialement, formées dans une carcasse (3), et un rotor (5) comprenant une pluralité desdits aimants s'étendant axialement dans une culasse (6) en étant enterrés selon une architecture dudit rotor (5) de type à concentration de flux, une première longueur axiale (Lr1) dudit rotor (5) étant supérieure à une deuxième longueur axiale (Ls1) desdites dents statoriques (2) **caractérisé en ce qu'**un rapport (r) de ladite première longueur (Lr1) à ladite deuxième longueur (Ls1) est sensiblement compris entre 1,2 et 1,3.

2. Moteur électrique synchrone à aimants permanents selon la revendication 1, **caractérisé en ce que** la deuxième longueur (Ls1) est comprise entre 28 et 35 mm et la première longueur (Lr1) est comprise entre 36 et 40 mm.

**3.** Moteur électrique synchrone à aimants permanents selon l'une des revendications 1 ou 2, **caractérisé en ce qu'**il comprend des bobines comportant des fils recouverts d'émail et **en ce que** les fils ont un diamètre compris entre 0,53 et 0,63 mm.

**4.** Moteur électrique synchrone à aimants permanents selon l'une quelconque des revendications précédentes, **caractérisé en ce que** le rotor (5) dépasse axialement du stator (1) de façon asymétrique.

**5.** Moteur électrique synchrone à aimants permanents selon l'une quelconque des revendications précédentes, **caractérisé en ce que** lesdits aimants permanents sont enterrés selon une architecture dudit rotor (5) de type à orientation radiale.

**6.** Moteur électrique synchrone à aimants permanents selon la revendication précédente, **caractérisé en ce que** le rotor (5) comporte une culasse (6) avec une âme centrale et des bras (8) s'étendant radialement par rapport à l'âme centrale et **en ce que** les bras comportent chacun à leur périphérie externe deux rebords (105) s'étendant de part et d'autre du bras (8).

**7.** Moteur électrique synchrone à aimants permanents selon la revendication précédente, **caractérisé en ce que** les aimants permanents sont logés dans des évidements (7) de la culasse (6) et **en ce que** les évidements (7) sont délimités chacun par deux faces latérales (112) en regard l'une de l'autre de deux bras (8) adjacents, une face externe de l'âme s'étendant entre les deux bras adjacents, et les rebords (105) des deux bras adjacents du rotor (5).

**8.** Moteur électrique synchrone à aimants permanents selon l'une quelconque des revendications précédentes, **caractérisé en ce que** lesdits aimants permanents sont constitués de ferrite.

**9.** Moteur électrique synchrone à aimants permanents selon l'une quelconque des revendications précédentes, **caractérisé en ce que** ladite culasse (6) et ladite carcasse (3) sont constituées chacune d'un empilement de tôles.

**10.** Moteur électrique synchrone à aimants permanents selon l'une quelconque des revendications précédentes, **caractérisé en ce que** le nombre de dents statoriques (2) est supérieur au nombre d'aimants permanents (114).

**11.** Compresseur d'un fluide réfrigérant destiné à une installation de climatisation, **caractérisé en ce qu'**il comprend une spirale entraînée par un moteur électrique synchrone à aimants permanents selon l'une quelconque des revendications précédentes.

**Patentansprüche**

**1.** Elektrischer Synchronmotor mit Dauermagneten von der Art derjenigen, die einen bewickelten Stator (1), der sich axial erstreckende Statorzähne (2) enthält, die in einem Gehäuse (3) geformt sind, und einen Rotor (5) aufweisen, der eine Vielzahl der Magnete enthält, die sich axial in einem Joch (6) erstrecken, indem sie gemäß einem Aufbau des Rotors (5) von der Art mit Flusskonzentration vergraben sind, wobei eine erste axiale Länge (Lr1) des Rotors (5) größer als eine zweite axiale Länge (Ls1) der Statorzähne (2) ist, **dadurch gekennzeichnet, dass** ein Verhältnis (r) der ersten Länge (Lr1) zur zweiten Länge (Ls1) im Wesentlichen zwischen 1,2 und 1,3 liegt.

**2.** Elektrischer Synchronmotor mit Dauermagneten nach Anspruch 1, **dadurch gekennzeichnet, dass** die zweite Länge (Ls1) zwischen 28 und 35 mm und die erste Länge (Lr1) zwischen 36 und 40 mm liegt.

**3.** Elektrischer Synchronmotor mit Dauermagneten nach einem der Ansprüche 1 oder 2, **dadurch gekennzeichnet, dass** er Spulen enthält, die emaillierte Drähte aufweisen, und dass die Drähte einen Durchmesser zwischen 0,53 und 0,63 mm haben.

**4.** Elektrischer Synchronmotor mit Dauermagneten nach einem der vorhergehenden Ansprüche, **dadurch gekennzeichnet, dass** der Rotor (5) axial unsymmetrisch über den Stator (1) vorsteht.

**5.** Elektrischer Synchronmotor mit Dauermagneten nach einem der vorhergehenden Ansprüche, **dadurch gekennzeichnet, dass** die Dauermagnete gemäß einem Aufbau des Rotors (5) der Art mit radialer Ausrichtung vergraben sind.

**6.** Elektrischer Synchronmotor mit Dauermagneten nach dem vorhergehenden Anspruch, **dadurch gekennzeichnet, dass** der Rotor (5) ein Joch (6) mit einem zentralen Kern und Armen (8) aufweist, die sich bezüglich des zentralen Kerns radial erstrecken, und dass die Arme je an ihrem Außenumfang zwei Randleisten (105) aufweisen, die sich zu beiden Seiten des Arms (8) erstrecken.

**7.** Elektrischer Synchronmotor mit Dauermagneten nach dem vorhergehenden Anspruch, **dadurch gekennzeichnet, dass** die Dauermagnete in Aussparungen (7) des Jochs (6) untergebracht sind, und dass die Aussparungen (7) je von zwei einander gegenüberliegenden Seitenflächen (112) von zwei benachbarten Armen (8), einer Außenseite des Kerns, die sich zwischen den zwei benachbarten Armen erstreckt, und den Randleisten (105) der zwei benachbarten Arme des Rotors (5) begrenzt werden.

**8.** Elektrischer Synchronmotor mit Dauermagneten nach einem der vorhergehenden Ansprüche, **dadurch gekennzeichnet, dass** die Dauermagnete aus Ferrit bestehen.

**9.** Elektrischer Synchronmotor mit Dauermagneten nach einem der vorhergehenden Ansprüche, **dadurch gekennzeichnet, dass** das Joch (6) und das Gehäuse (3) je aus einem Blechstapel bestehen.

**10.** Elektrischer Synchronmotor mit Dauermagneten nach einem der vorhergehenden Ansprüche, **dadurch gekennzeichnet, dass** die Anzahl von Statorzähnen (2) größer ist als die Anzahl von Dauermagneten (114).

**11.** Kompressor eines für eine Klimaanlage bestimmten Kühlmittels, **dadurch gekennzeichnet, dass** er eine Spirale aufweist, die von einem elektrischen Synchronmotor mit Dauermagneten nach einem der vorhergehenden Ansprüche angetrieben wird.

**Claims**

**1.** Permanent magnet synchronous electric motor of the type of those comprising a wound stator (1) comprising axially extending stator teeth (2) formed in a yoke frame (3), and a rotor (5) comprising a plurality of said magnets extending axially in a yoke (6) by being buried according to an architecture of said rotor (5) of type with flux concentration, a first axial length (Lr1) of said rotor (5) being greater than a second axial length (Ls1) of said stator teeth (2), **characterized in that** a ratio (r) of said first length (Lr1) to said second length (Ls1) lies substantially between 1.2 and 1.3.

**2.** Permanent magnet synchronous electric motor according to Claim 1, **characterized in that** the second length (Ls1) lies between 28 and 35 mm and the first length (Lr1) lies between 36 and 40 mm.

**3.** Permanent magnet synchronous electric motor according to one of Claims 1 and 2, **characterized in that** it comprises windings comprising enamel-coated wires and **in that** the wires have a diameter of between 0.53 and 0.63 mm.

**4.** Permanent magnet synchronous electric motor according to any one of the preceding claims, **characterized in that** the rotor (5) extends axially beyond the stator (1) asymmetrically.

**5.** Permanent magnet synchronous electric motor according to any one of the preceding claims, **characterized in that** said permanent magnets are buried according to an architecture of said rotor (5) of type with radial orientation.

**6.** Permanent magnet synchronous electric motor according to the preceding claim, **characterized in that** the rotor (5) comprises a yoke (6) with a central core and arms (8) extending radially relative to the central core and **in that** the arms each comprise, at their outer periphery, two flanges (105) extending on either side of the arm (8).

**7.** Permanent magnet synchronous electric motor according to the preceding claim, **characterized in that** the permanent magnets are housed in voids (7) of the yoke (6) and **in that** the voids (7) are each delimited by two mutually facing lateral faces (112) of two adjacent arms (8), an outer face of the core extending between the two adjacent arms, and the flanges (105) of the two adjacent arms of the rotor (5).

**8.** Permanent magnet synchronous electric motor according to any one of the preceding claims, **characterized in that** said permanent magnets consist of ferrite.

9.  Permanent magnet synchronous electric motor according to any one of the preceding claims, **characterized in that** said yoke (6) and said yoke frame (3) each consist of a stacking of plates.

10. Permanent magnet synchronous electric motor according to any one of the preceding claims, **characterized in that** the number of stator teeth (2) is greater than the number of permanent magnets (114).

11. Compressor for a refrigerant intended for an air conditioning installation, **characterized in that** it comprises a coil driven by a permanent magnet synchronous electric motor according to any one of the preceding claims.

Fig. 1a

Fig. 1b

**Fig. 2**

Flux supplémentaire

r=Lr1/Ls1

**Fig. 3**

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1255481
- EP 0831580 A
- FR 1254949
- EP 2506399 A
- FR 1161016
- FR 1161019

**Littérature non-brevet citée dans la description**

- **M. KHANCHOUL et al.** Design and study of a permanent magnet synchronous motor. *Progress in Electromagnetism Research Symposium,* 20 Mars 2011, 160